Europäisches Patentamt

European Patent Office

Office européen des brevets

(19)

(11) Publication number: **0 071 685**
**A2**

(12) # EUROPEAN PATENT APPLICATION

(21) Application number: **81305690.0**

(22) Date of filing: **02.12.81**

(51) Int. Cl.³: **G 21 C 19/06**

(30) Priority: **12.08.81 US 291466**

(43) Date of publication of application: **16.02.83**
**Bulletin 83/7**

(84) Designated Contracting States: **AT BE CH DE FR GB IT LI LU NL SE**

(71) Applicant: **Soot, Olaf, 9 Tomahawk Lane, Greenwich Connecticut 06830 (US)**
Applicant: **McPhee, Alexander H., 89 The Waterway, Planedome Heights New York 11030 (US)**

(72) Inventor: **Soot, Olaf, 9 Tomahawk Lane, Greenwich Connecticut 06830 (US)**
Inventor: **McPhee, Alexander H., 89 The Waterway, Planedome Heights New York 11030 (US)**

(74) Representative: **Alexander, Thomas Bruce et al, Boult, Wade & Tennant 27 Furnival Street, London EC4A 1PQ (GB)**

(54) **Method and apparatus for handling nuclear fuel elements.**

(57) An improved method and apparatus for transferring nuclear fuel elements between a fluid-filled storage pool (11) and a cask (5) is disclosed. The cask (5) is supported within and is restrained by a tank (2) which is transported between terminal locations (6, 13) of a nuclear facility. Transfer of fuel elements between the storage pool (11) and the cask (5) is accomplished by coupling the tank (2) to a port (7) of the pool (11). The transporter (1) accurately positions and restrains the tank (2) during transfer. In a preferred embodiment, the cask tank (2) is unweighted from the transporter (1) during transfer and is advanced into a fluid-sealed engagement with a port surface of the pool (11). In an alternative arrangement, the cask tank (202) remains supported on the transporter (201) during its transfer and lifting means mutually engaging the transporter (201) and tank (202) advance the tank (202) toward the port surface for establishing a coupling between the port and the cask (205). The method and apparatus substantially reduce fluid contact with an exterior surface of the cask (5 or 205) during transfer and potential nuclear contamination; they enhance the protection of the transfer apparatus against seismic disturbances; and, they accomodate casks of different sizes.

EP 0 071 685 A2

1.

METHOD AND APPARATUS FOR HANDLING
NUCLEAR FUEL ELEMENTS

This invention relates to the transfer of nuclear fuel between storage pools and shipping casks.

In the operation of nuclear reactors, a controlled nuclear chain reaction is maintained in a reactor core by fuel elements containing radioactive uranium. Typically, these elements comprise long, thin, tubular structures made of steel, clad with a zirconium alloy and within which are packed a number of pellets containing a radioactive uranium composition. The fuel elements which can be efficiently utilized for extended periods of time eventually fail due to reduced activity or physical integrity. The resulting spent fuel elements must then be removed and replaced to assure safe, efficient reactor operation.

After removal from the reactor core, the spent fuel elements are generally transferred to a fluid-filled fuel storage pool for retention pending shipment to a disposal or recycling facility. Similarly, fresh fuel elements can be stored in fluid-filled pools after shipment to the nuclear reactor location but prior to their placement

2.

in the core. Spent fuel elements are typically shipped from one point to another in sealed, fluid-filled, shielded containers called casks. Transfer of the fuel elements from the pool to the casks, and from the casks to the pool, must usually be done without removing the fuel from the fluid, using constantly-filtered water, to assure maximum safety. However, the art has experienced substantial difficulty in safely and efficiently effecting such transfer. Water employed in the pool or gas or air surrounding the spent fuel will be contaminated regardless of precautions taken. Moreover, even if a system were designed to have essentially zero contamination in the environment, prudence would still dictate treating it as if it were contaminated to guard against possible anomalies in the system.

Among the early prior art transfer systems were those which immersed the cask in the pool to allow transfer without removing the fuel from the water. There were many risks attendant with such transfer systems, not the least of which was the total wetting of the cask exterior with contaminated water. The contaminated wash water produced had to be disposed of.

Faced with this problem of cask contamination, there have evolved a number of systems for effecting transfer without wholly immersing the cask. These systems have come to be known as dry cask systems. Unfortunately, known dry cask systems have exhibited various drawbacks.

For example, U.S. Patent 3,765,549 presents a system employing a pair of independently-actuatable,

3.

concentric bellows mounted beneath a fuel storage pool and circumscribing a hatch therein. According to that disclosure, a fuel cask is positioned directly below the hatch and the bellows are extended downwardly to seat against the cask and form a transfer channel between the pool and the cask. The channel is then flooded, the hatch opened, and transfer effected. The particular arrangement of bellows and supporting devices shown, however, render the system susceptible to serious losses of contaminated material in the event the cask to bellows sealing surfaces do not match perfectly or if the cask sealing surface becomes dirty or damaged in transportation. This system does not provide secondary means for preventing leakage and is susceptible to leakage in the event of moderate seismic disturbances.

In an attempt at overcoming certain of the difficulties of the bellows arrangements, U.S. Patent 3,910,006 discloses that a direct contact between a cask and the underside of a transfer pool can be employed. This arrangement is said to eliminate the problems associated with large differential pressures on the bellows and the large amounts of water that the bellows arrangements must employ in the transfer channel. Here again different casks with different fabrication tolerances have to be matched with sealing surfaces beneath the fuel transfer pool and leakage cannot be prevented if casks do not properly match the surface or if their sealing surfaces become dirty or damaged in transportation. This system does not provide a secondary means for preventing leakage and is also susceptible to leakage in the event of a moderate seismic disturbance.

4.

In U.S. Patent 3,883,012 there is described yet another dry cask system. In particular it is disclosed that the fuel cask can be positioned within a tank to accommodate casks of varying dimensions and to avoid some of the risks that might still surround the use of systems such as that described in U.S. 3,765,549. While this disclosure suggests lateral seismic restraints on the cask tank, no means are identified for suitably positioning the cask transporter and for restraining the cask tank while at the loading terminal.

The art has thus evolved fuel transfer systems culminating in a number of dry cask systems. There remains however, a need for a dry cask system which permits safe and efficient transfer of nuclear fuel elements between casks and fluid-filled storage pools.

It is an object of the present invention to provide an improved method and apparatus for safely and efficiently transferring nuclear fuel elements between storage pools and dry casks.

It is a further and more specific object of the invention to provide an improved method and apparatus for effecting transfer of nuclear fuel elements between storage pools and dry casks supported within cask tanks which are transported between transfer stations and decontamination stations by means which also provide effective sealing between a fuel transfer pool and a cask tank, accurate repeat positioning of the system and seismic restraint during transfer operations.

5.

Another object of this invention is to provide a novel port hatch means for efficient transfer and maximum safety from seismic disturbances.

It is another object of this invention to provide an improved dry cask method and apparatus for transferring nuclear fuel elements between a storage pool and a dry cask positioned within a cask tank wherein the cask tank is advanced into mating contact with an undersurface of the storage pool.

Yet another object of this invention is to provide an improved dry cask method and apparatus for transferring nuclear fuel elements between a storage pool and a cask positioned within a tank wherein the tank is advanced into engagement with a surface of the storage pool and the weights of the cask, the cask tank and a column of water in the transfer pool is removed from a transport means and is supported by a lift means on a transfer corridor floor.

The invention provides a method for transferring nuclear elements between a fluid storage pool and fuel transfer cask comprising the steps of:

a) Positioning at a first terminal location a transport having an aperture formed in a frame thereof and a cask tank vertically supported in said aperture on said transport;

b) introducing and supporting a nuclear fuel element cask into said tank at said first terminal location;

c) advancing said transport in a horizontal direction to a second terminal location adjacent an overhead port of a nuclear fuel storage pool;

d)    advancing said tank in a vertical direction toward said
      port at said second terminal location;

e)    supporting said tank in engagement with said port; and,

f)    establishing a fluid seal between said tank and said port.

`Yet another object of this invention is the provision
of an improved method and apparatus for transferring nuclear
fuel elements between a storage pool and dry cask supported
within a cask tank, wherein paired bellows arrangements have
nuclear shielding material positioned therebetween.

It is yet another object of this invention to provide
an improved method and apparatus for transferring nuclear fuel
elements between storage pools and dry casks supported within
cask tanks wherein novel bellows arrangements are efficiently engaged in sealing contact.

The invention also provides apparatus for transferring
nuclear elements between a fluid storage pool and a fuel
transfer cask comprising:

a)    a transport means adapted for movement in a horizontal
direction, said transport means having a frame and an
aperture formed in said frame;

b)    a tank means vertically supported on said transport
means and extending through said aperture; .

c)    a nuclear fuel element cask supported in said tank
means;

d)    means for advancing said tank in a vertical direction
toward an overhead port at a terminal location;

e)    means for supporting said tank in engagement with said
port; and,

f)    means for establishing a fluid seal between said tank
and said port.

7.

In a preferred embodiment of the apparatus of the invention, a means is provided for unweighting the cask tank from the transport means at the second location and for advancing a surface of the tank into engagement with a transfer pool port surface and for restraining the tank in engagement with the surface. An alternative embodiment of the apparatus provides means for supporting the cask tank on the transport means and for advancing the cask tank into engagement with the port surface. Other features of the apparatus provide for restraining and accurately positioning the transport means and means integral with the transport means for restraining the tank.

In still other alternative embodiments of the invention, the cask tank is supported on the transport means at the second location and extensible coupling means are provided for coupling between the tank and the port. Other features of the apparatus provide for restraining and accurately positioning the transport means and means integral with the transport means for restraining the tank.

The invention further provides a method for transferring nuclear fuel elements between a fuel storage pool of a nuclear facility and a nuclear fuel transfer cask comprising the steps of:

a) positioning a wheeled transport means which travels on elevated tracks in a corridor between first and second terminal locations of a nuclear facility at a first terminal location, said transport means including a frame defining an aperture formed therein and a cask

8.

tank positioned vertically in and extending through
said aperture and supported on said transport, said cask
tank extending below said transport means;

b) lowering a nuclear fuel element cask into said tank at
said first terminal location and establishing a fluid
sealed barrier between inner and outer surfaces of
said cask;

c) advancing said transport means, said vertically
supported tank and said cask in a horizontal direction
to a said second location adjacent an overhead port
of said nuclear fuel storage pool;

d) unweighting said tank from said transport by
vertically advancing said tank into engagement with
said port and supporting said tank from beneath by a
rigid structure;

e) establishing a fluid sealed channel between said
port and an interior of said cask;

f) flooding the sealed channel;

g) actuating a port closure to an open position for
establishing clear access through said port between
said pool and said cask; and

h) transferring fuel elements between said cask and said
pool.

Embodiments of the invention will now be described,
by way of example, with reference to the drawings, wherein:

9.

FIGURE 1 is a fragmentary, elevation view, partly broken away and partly in section of a nuclear fuel handling building illustrating a dry cask handling apparatus of this invention which is engaged in a transfer position;

FIGURE 2 is an enlarged side elevational view, partly in section and partly broken away, showing in greater detail the dry cask handling apparatus of FIGURE 1;

FIGURE 3 is a view taken along line 3-3 of FIGURE 2 illustrating means for supporting the cask in an aperture provided in a transport means;

FIGURE 4 is a fragmentary, enlarged cross-sectional view of a coupling means used with the apparatus of FIGURES 2 and 8;

FIGURE 5 is a side elevation view in section of a tank means used with the apparatus of FIGURE 2 and illustrating a cask adapter.

FIGURE 6 is a fragmentary view of an upper section of the tank of FIGURE 5 taken along line 6-6 of FIGURE 5 and illustrating means for restraining an upper end of the fuel cask within the cask tank;

FIGURE 7 is a fragmentary view of a lower section of the tank of FIGURE 5 taken along line 7-7 of FIGURE 5 and illustrating a means for supporting and restraining a lower end of the fuel cask within the cask tank;

FIGURE 8 is a side elevation view, partly in section and partly broken away of an alternative embodiment of the dry cask handling apparatus of FIGURE 1 illustrating a cask tank means which is supported on a transport means which is advanced vertically for effecting a seal.

The method and apparatus of this invention enables spent fuel to be removed from a spent fuel storage pool and to be loaded into a spent fuel shipping cask for removal from a nuclear plant. It will be appreciated that the method and apparatus of the invention can also be employed for transferring fuel from the cask to the pool. Moreover, the type of facility, whether it be a nuclear power plant, a nuclear fuel processing plant or other facility requiring transfer of fuel elements, is not of importance to this invention which has utility wherever cask pool transfer systems are required. Accordingly, the following description, referring to transfer of spent fuel from a pool to a cask, must be taken as illustrative and not limiting of the invention.

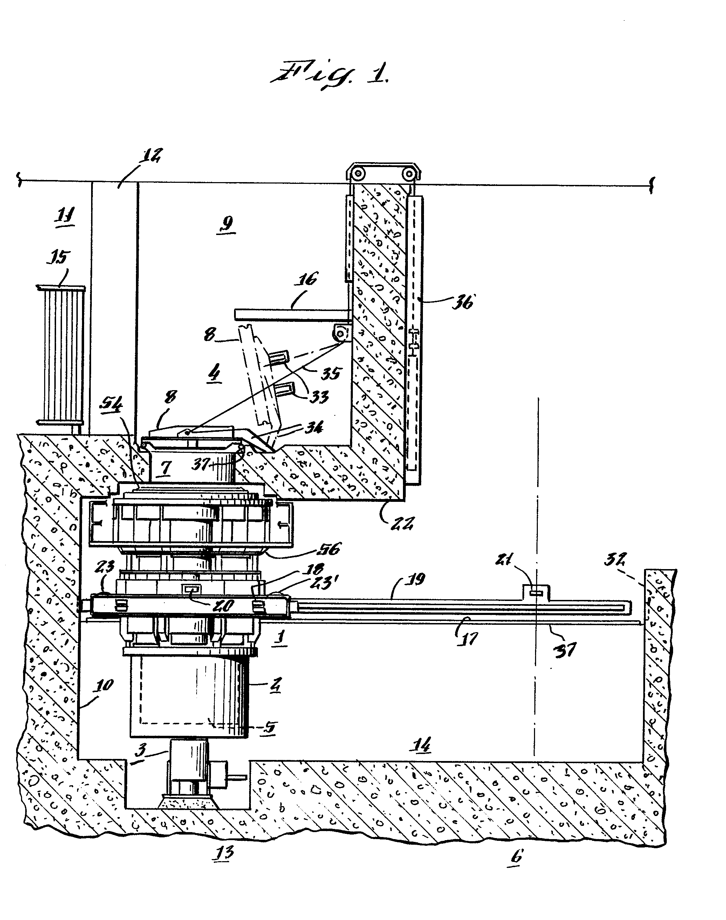

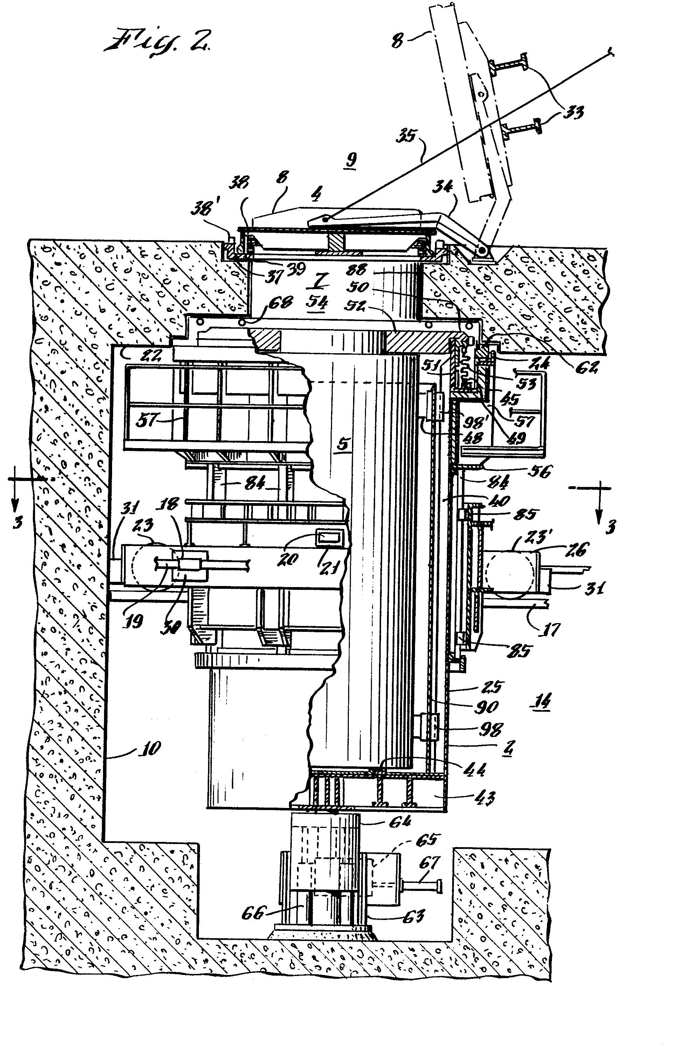

Referring now to FIGURES 1 & 2, one embodiment of the apparatus of the invention is shown in position to effect transfer of fuel elements. The apparatus comprises a cask 5, a cask tank transport means 1, a cask tank means 2, cask tank lifting and support means 3, a port closure means 4. Controls for sequentially actuating the various devices and mechanisms disclosed herein can be freely adapted from known techniques depending upon the particular timing and sequencing desired. The cask tank means 2 is supported and guided on the cask tank transport means 1, when not connected to fuel transfer pool 9, and houses the fuel cask 5. In operation for fuel element removal, an empty cask 5 is positioned in the cask tank means 2 at a first decontamination terminal location 6.
The transport means 1 advances the tank means to a second
terminal location 13 beneath a pool port 7 at an opposite
end of a transfer corridor 14. The lifting and supporting
means 3 then lifts the tank 2 to port 7 and supports it at
this position as shown on FIGURES 1 & 2, and cask tank 2
is sealed to port 7 near its top portion. At this location,
an interspace 54 between the interior of cask 5 and the port
7 below a port closure cover 8 is flooded. The cover 8
is then raised as shown in FIGURE 1 to permit transfer of
fuel elements from a fuel transfer pool 9 to the cask 5.

FIGURE 1, which is a fragmentary view of a building
10 of a nuclear fuel handling facility, illustrates a fuel
storage pool 11, the transfer pool 9, and a transfer canal 12.
The transport means 1 and tank means 2 are shown positioned at
the second terminal location 13 which is a fuel element loading
terminal of the facility. The cask tank 2 is supported by
lifting means 3 and sealed to port 7 near the top part of cask
tank 2. The port closure means 4 is shown in both closed and
opened positions. The dry cask handling apparatus is thus
shown conditioned for a fuel element transfer operation.

Fuel racks 15 are located within the fuel storage pool
11 vertically supporting fuel assemblies (not shown) submerged
in a fluid, as for example water, which fills the pool.
Adjacent to the fuel storage pool 11 is the fuel transfer pool
9 connected thereto by the fuel transfer canal 12 having
provision for the installation and removal of canal gates
(not shown) to permit the movement of fuel assemblies
between the storage and transfer pools by means of a fuel handling machine (not shown), typically a crane. Within the
fuel transfer pool 9 can be a cask head storage ledge 16.
At the bottom of the transfer pool 9 is the port 7 which
communicates with the transfer corridor 14 below. The cask
tank means 2 is shown laterally restrained by the transport
means 1 directly below the port 7 and vertically supported by
lift means 3.

The transport means 1 of FIGURES 1, 2, and 3 includes
means for accurately positioning the cask tank beneath the
port and for providing horizontal and vertical transport restraint.
The transport means 1 is shown locked to the walls of the
building 10 at the terminal location 13 on transport rails
17 on which it travels. Transport side guide shoes 18(Fig. 2 & 3) are
shown bearing against transport side guide rails 19 which,
as shown partly broken away for clarity, are fixed to the
building walls on opposite sides of the corridor 14. This
arrangement accurately positions the cask tank beneath the
port 7 and restrains the lateral movement of the transport
means 1. Transport lock bars 20 are provided and have
tapered entrance ends which enable them to enter sockets 21
even when slightly out of alignment and force the transport
means into accurate alignment with port 7. Lock bars 20
are shown extended in their locking position in which they
engage lock bar sockets 21 formed in opposite walls at the
first and second terminal locations 6 and 13 respectively.
In FIGURE 1, a socket 21 is illustrated on the distant
wall of the terminal location 6. The lock bars 20, when
extended into the lock bar sockets 21 on both sides of corridor
14, not only accurately position the transport means at each of the terminals 6 and 13, but they also restrain.

horizontal movement in a direction parallel to rails 17.

The cask tank means 2 is lifted to an elevated position

as shown in FIGURE 2, by lift means 3. The cask tank top flange 24 is then engaged with and sealed to an embedment seal ring 62.

A means is provided for guiding vertical movement of the cask tank means 2 through the transport frame 26.

and comprises a plurality of guide rails 84 mounted to the outside of the cask tank 2 which engage guide shoes 85 (Fig. 3)

mounted to the transport frame 26. After the transport means is accurately positioned at the terminal location 13 as was described hereinbefore, the cask tank 2 is raised by the lifting means 3. The guide rails 84 and guide shoes 85 maintain accurate positioning of the cask tank 2 as it is raised and assure that the tank top flange 24 engages the embedment seal ring 62 to establish a seal. Alternative to the guide rails and shoes, a cylindrical guide body, such as body 284, shown on FIGURE 8, mounted to or used with cask tank 2 can be used to guide vertical movement of the tank.

When the cask tank top flange is disengaged at the loading terminal 13, and at all other positions, from embedment seal ring 62, the cask tank means 2 is lowered to the transport 1 and is supported by its flange 56 in contact with the transport frame 26.

A feature of the dry cask handling apparatus embodiment of FIGURE 2 is the unweighting of the cask tank means 2 from the transport means 1. When the cask tank means 2 is coupled to the embedment seal ring 62, all of the vertical load is supported by lift means 3 at terminal location 13. The height of water in fuel transfer pool 9 is supported by cask tank means 2 in addition to weight of the internally positioned cask 5. In the embodiment of FIGURE 2, this entire loading is transferred directly to the floor slab through the lift means 3. As a result, transport means 1 is structurally designed to support and transport only the weights of cask 5 and cask tank means 2 but not the weight of the column of water at terminal location 13. The transport means can accordingly be made lighter in weight and therefore is less costly. Because of the lift means 3, the apparatus of the embodiment of FIGURE 2 is substantially rigid; its natural frequency is high, and the seismic loads which are related to natural frequency of the system are therefore low. At terminal 13 the transporter supports the cask tank means 2 against lateral loads through the guide rails 84 and the guide shoes 85. These lateral loads are transferred to the building walls through transport side guide shoes 18, transport side guide rails 19 in a first direction, and through transport lock bars 20 in a second direction. Cask tank top flange 24 and lift means 3 can be used, in addition to transport 1 to support lateral loads if so desired. Lift means 3 supports all vertical loads when the port cover 8 is open and cask tank means 2 is subjected to high loads from the head of water in fuel transfer pool 9. The lowering sequence of lifting head 64 starts with slightly raising the lifting head 64, withdrawing the lift lock block 65 by lift lock actuating cylinder 67.and then lowering the lifting head 64 by hydraulic cylinders 66 until cask tank means 2 is lowered to the transport means 1 and is supported by its flange 56 in contact with the transport frame 26. The lifting head 64 is further lowered to provide adequate clearance from cask tank means 2. Alternatively, the lifting means comprises a single hydraulic piston-cylinder which is centrally located under the cask tank subsystem 2. When a hydraulic piston-cylinder assembly is provided for accomplishing vertical movement of the cask tank 2, means are provided for mechanically locking the piston in a raised position to inhibit lowering of the cask tank subsystem, in the event that hydraulic pressure is interrupted during fuel transfer.

Lift means 3, shown on FIGURE 2 consists of a lift base structure 63, lifting head 64, lift lock block 65, mounted into base structure 63, hydraulic cylinders 66, lift lock actuating cylinder 67, hydraulic power unit (not shown) and controls (not shown). During the lifting sequence, the lifting head 64 is raised by hydraulic cylinders 66 mounted on lift base structure 63. Furthermore, the lifting head 64 is horizontally guided and restrained by guide shoes (not shown) also mounted on lift base structure 63. Once the lifting head 64 is raised to its high position, the lift lock block 65 is moved under the lifting head 64 by lift lock actuating cylinder 67. Following this, the lifting head 64 is lowered on the lift lock block 65. Thus, all the vertical loads applied to cask tank means 2 are supported on lift lock block 65 and no cask tank means 2 vertical loads are carried by transport means 1 or by hydraulic cylinders 66 during the fuel loading. As a further alternative, the jacks providing

16.

the necessary vertical upward force and movement can comprise a
plurality of conventional, self-locking, screw jacks which are
driven simultaneously by a common motor (not shown) through
suitable shafting and gear boxes.

When the cask tank means 2 of Figures 1 and 2 is lowered by
lift means 3 from an elevated position, it decouples from port
7 and engagement with embedment seal 62 is interrupted. The
tank 2 which is positioned in an aperture 87 (Fig. 3) of the
transporter frame 26 is guided during descent by the plurality
of guide rails 84 extending from an outer surface 25 of the
tank and by the guide shoes 85 which are mounted to the transporter frame. As shown in FIGURE 2, the tank 2 is provided with
an annular support flange 56 and a plurality of structural ribs
57. The flange and ribs are mounted to an outer surface 25 of
the tank. The annular support flange 56 engages and supports
the tank on the transporter frame 26.

The transporter means includes transport wheels 23 and
23' which support the transport frame 26 and engage and travel
on rails 17. These rails are mounted to wall ledges 37 of the
building 10. Wheels 23' are traction wheels and are driven by
a motor and gearing 27 (Fig. 3) which is fitted with a spring
applied magnetically-released, or equivalent brake. A driving
force is transmitted to the wheels by drive shafts 28. The
traction wheel drive is similar to the drive of a conventional
overhead crane bridge or trolley except that provision is made
in the electrical control to magnetically release the brake
while the motor is de-energized and the locking bars 20 are
being driven into their respective socket 21. A suitable control is provided to assure that the brake on the motor 27 is
released when the locking bars 20 are engaging the sockets 21.

Each locking bar is actuated by a suitable mechanism 29 such as a jack screw or hydraulic or pneumatic cylinder, which mechanism also provides means for guiding and supporting the locking bar throughout its movement.

Restraint of the transport means 1 is provided against horizontal movement in a direction perpendicular to the side guide rails 19 as previously described, and also against vertical upward movement by means of horizontal guide shoe surfaces 30 which bear against the bottom of the side guide rails 19. Buffers 31 on both ends of the transport frame 26 26 are shown and adapted to engage buffer plates 32 which are mounted at end walls of corridor 14 at each terminal. The buffers 31 are provided to dissipate the energy of the moving transport means and its supported loads and thereby absorb the shock of inadvertant overtravel at either terminal 6 or 13. The buffers are alternatively hydraulic or mechanical and, in the case of overtravel, strike buffer plates 32 which are fixed to the end walls of corridor 14 at both terminals.

In the embodiment of FIGURE 2, the cask 5 is supported within the cask tank means 2 by a cask support adaptor 90. Cask supporter adaptor 90 is described in detail hereinafter with respect to FIGURES 5,6 and 7. Cask supporter adaptor 90 can be used when a relatively quick internal change of the cask tank means 2 is required, as, for example, to receive a cask 5 of relatively larger or smaller dimension. Alternatively, other means comprising separate cask bottom support structure and separate upper guide plates can be utilized.

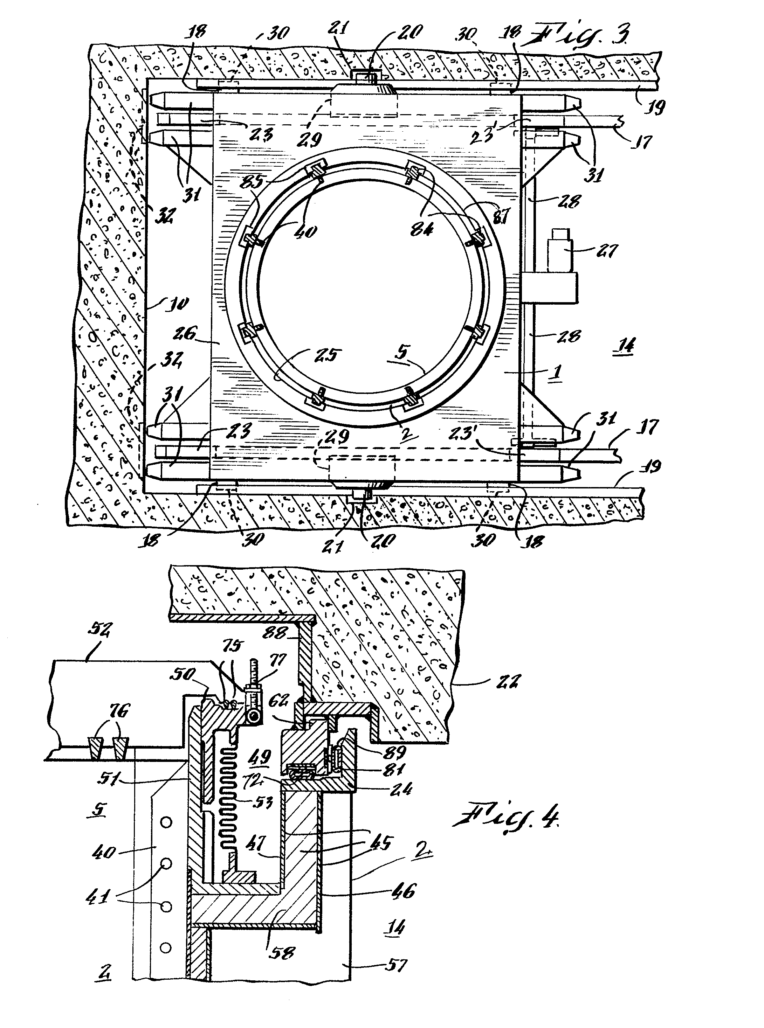

FIGURE 4 is an enlarged view illustrating in detail one embodiment of the cask top sealing details used with the embodiments of the dry cask handling apparatus of FIGURES 1,2,and 8. The embedment seal ring 62 is annular and is shown mounted by welding below ceiling 22 of corridor 14 to plate members of port embedment 88. A pair of annular inflatable seals 72 and 89 for sealing the cask tank means 2 to the bottom of port 7 are mounted to embedment seal ring 62 and engage tank top flange 24 thus providing a waterproof seal between the tank and port 7. Mounting of seals 72 and 89 to horizontal and vertical faces respectively of the seal ring is provided by suitable adhesives such as an epoxy resin or by other mechanical engaging means. The seals 72 and 89 are separately actuated, in a preferred embodiment, by air pressure after the cask tank means 2 has completed its engaging vertical movement and the cask tank top flange 24 is engaged to embedment seal ring 62.

Cask tank top flange 24 is mounted near a periphery of a top segment of the cask tank means 2. When it is advanced vertically upward it closely engages the embedment seal ring 62. Cask tank top flange 24 also restrains movement of the upper segment of the cask tank means. The cask tank top flange 24 comprises an annular shaped angle body having a vertically extending surface 81 and an integral, transversely extending surface 82 which with seals 72 and 89, seal and establish a fluid sealing engagement.

19.

An annular gutter 49 extends about the periphery of the top flange segment of the cask tank means 2. A wall 45 of the gutter 49 is of double wall construction having plate wall members 46 and 47 and an annular core of radiation shielding material 58 positioned between the wall members.

The gutter 49 also provides a low point from which water in the interspace 54 and in the port 7 below the port closed over (Fig.12) can be drained after the fuel transfer operation is completed and the port cover 8 is closed and sealed to the floor of the transfer pool 9.

The inside wall 51 of the annular gutter 49 serves to provide mounting space for a guided adaptor ring 50 which is slideably mounted in contact with the inner circular wall 51 of the gutter 49 to permit vertical movement of an adaptor plate 52 to accommodate slight variations in the heights of similar fuel casks 5. The guided adaptor ring 50 is sealed to the bottom of the annular gutter 49 by means of a flexible bellows 53 which enables vertical movement of the adaptor plate 52 while sealing the space between cask and tank against leakage.

The adaptor plate 52 is positioned on top of guided adaptor ring 50 and seals are provided in order to prevent the entry of water into an annular space between the outside of fuel cask 5 and the inside of cask tank means 2.

The adaptor plate 52 is shown sealed to the guided adaptor ring 50 by means of annular seals 75. It is similarly sealed to a surface of a segment of the top of cask 5 by seals 76. A clamping force between the adaptor plate 52 and the guided adaptor ring 50 is provided by a plurality of swing bolts 77 fastened to the guided adaptor ring 50. A separate adaptor plate 52 is required for different types of casks to accommodate differing end constructions.

In FIGURES 1 and 2 a novel port closure means 4 of this invention is shown in detail. The port closure means 4 provides an effective fluid seal in a closed position, is readily disengaged to an open position, and is restrained in the open position. In FIGURES 1 and 2, the cover 8 is shown in dotted lines in an open position, and in solid lines in a closed position. Referring to FIGURE 1, the port closure means 4 which forms a fluid and leak proof seal between fuel transfer pool 9 and the corridor 14 is shown in its open position with port cover 8 tensioned against backstop beams 33. The port closure means 4 includes the port cover 8 mounted to a pivot arm 34 which rotates about a pivot bearing and support fixed to the transfer pool floor, the lifting cables 35, port cover actuator 36, and port cover base 37 which is recessed in the transfer pool floor about port opening 7. In FIGURE 2, concentric protective rings 38 and 38' are shown which serve to protect a sealing surface 39 of the port cover base 37 from impact by objects which could distort the seal surface and disable

21.

sealing engagement with port cover base 37. The inner protective ring 38 is a circular ring proportioned to absorb the energy of a heavy falling object and is positioned with respect to port cover base sealing surface 39 at a location which enables the seals to engage a bottom surface of the closed port cover 8. The outer protective ring 38' is similarly located outwardly with respect to port cover sealing surface 39 for enabling engagement with the bottom seals of the cover 8 and above an optional vertical inflatable seal (not shown) which seals against the vertical outside cylindrical surface of the closed port cover 8. Protective rings 38 and 38' are provided with passages for draining pool water into interspace 54. Backstop beams 33, as shown in the fuel transfer pool 9, are mounted to and supported by the sidewalls of the transfer pool. They provide a restraint against which the port cover 8 is held and seismically restrained in an open position by the tensioned cable 35.

A circular header pipe 68 is positioned in the port 7. The header pipe includes a plurality of spray apertures or orifices (not shown) arrayed for directing an effluent thereof into interspace 54. The purpose of the header pipe is to spray wash water into the interspace 54 on an underside of the cover 8 and all other internal surfaces which may become contaminated with radioactive particulates during the transfer of fuel assemblies through the port 7 and interspace 54.

22.

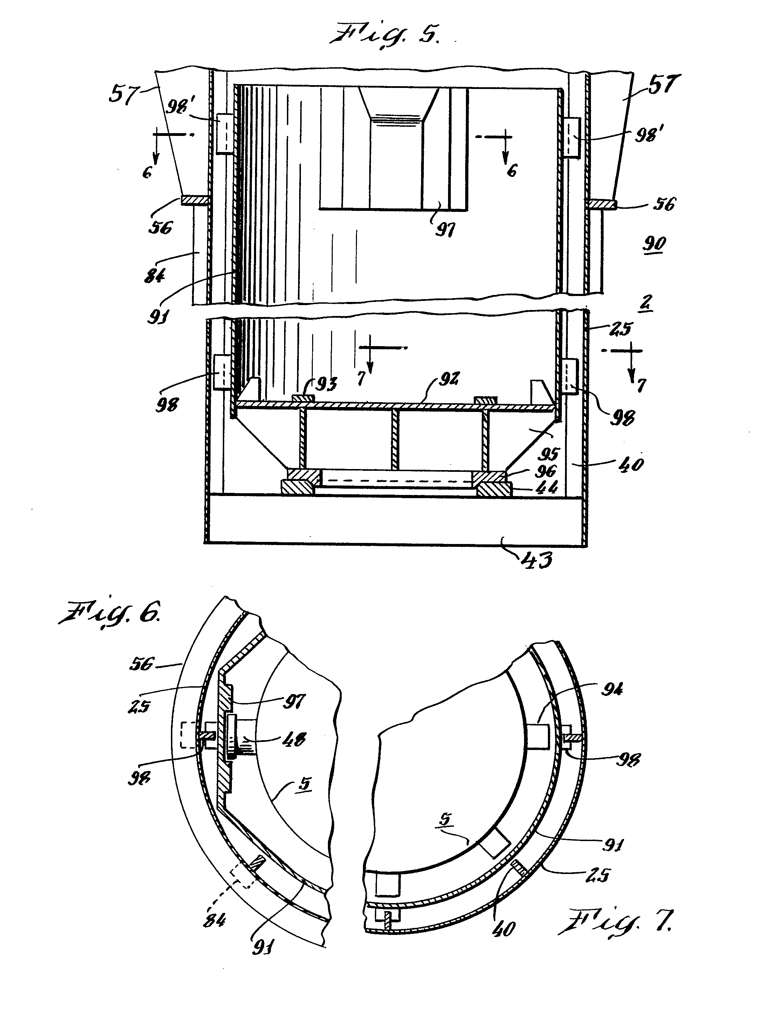

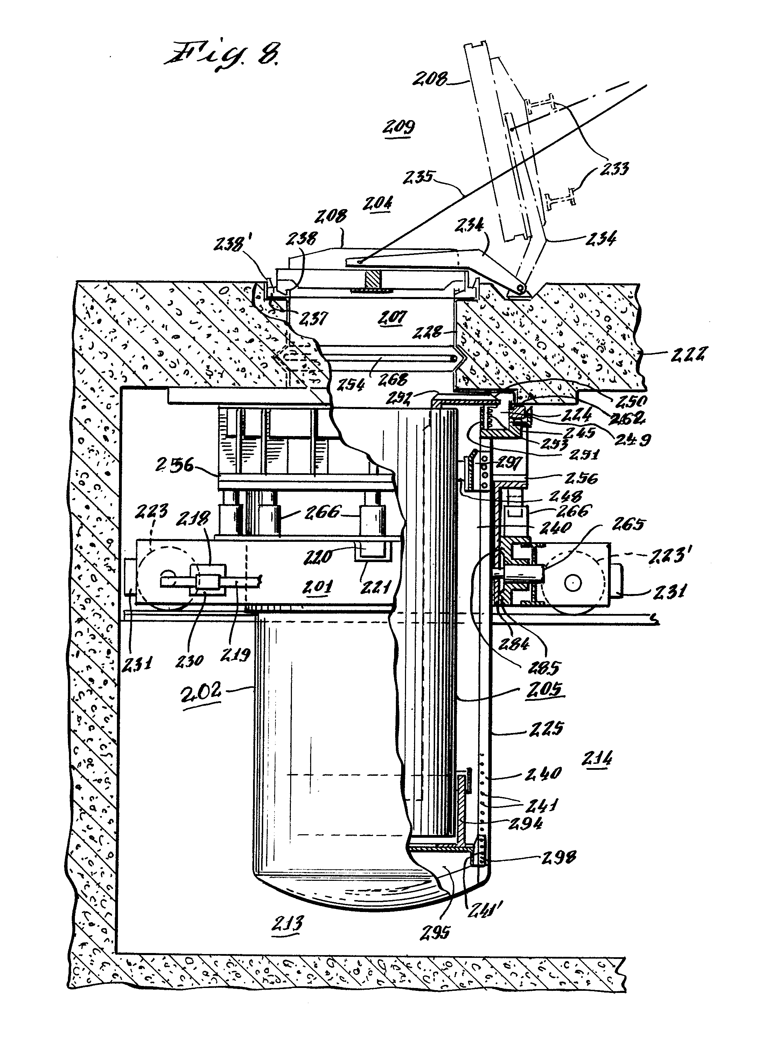

FIGURES 5, 6, and 7 illustrate a cask support adaptor 90, previously shown in FIGURE 2. FIGURE 5 is a vertical cross-section view of cask support adaptor 90. FIGURE 6 is a cross-section taken at line 6-6. FIGURE 7 is a cross-section taken at line 7-7. This cask support adaptor comprises a cylindrical shell 91 having a plurality of lower and upper guide shoes 98 and 98' respectively, which engage internal, elongated, vertical extending ribs 40 of cask tank means 2 and guide and restrain the cask adaptor 90 within cask tank. The cask adaptor includes a vertical support bottom ring 96 which engages a cask tank base ring 44 positioned on cask tank base 43. Beveled surfaces between the vertical surfaces of adaptor bottom ring 96 and cask tank base ring 44 · are provided to accurately position the bottom of cask support adaptor 90 in the cask tank means 2 and to support the cask support adaptor base against lateral loads. The adaptor bottom ring 96 is connected to cylindrical shell 91 by the means of an adaptor base structure 95 and adaptor base plate 92. The cask is vertically supported within cask support adaptor 90 by cask support ring 93, which is part of adaptor base plate 92. Additional horizontal support for the bottom of a cask (not shown) positioned within the adaptor is provided by lateral radially extending supports 94 which are adjustable in a radial direction and are fastened to adaptor base plate 92. For clarity in FIGURE 5, the fuel cask 5 is not shown but is shown in FIGURES 6 and 7.

FIGURE 5 also illustrates upper, elongated guide plates 97 at opposite chordal positions located at the top of cask support adaptor 90. These guide plates position the top of the fuel cask 5 and restrain horizontal movement of the top of the fuel cask 5 in all horizontal directions. Upper guide plates 97 are provided with converging entry surfaces to facilitate entry of fuel cask trunnions 48 when a fuel cask 5 is introduced into the adaptor by lowering into the adaptor 90.

A separate cask support adaptor 90 is required for each size and construction of fuel cask 5. The outer dimensions, guide shoes 98 and 98', and adaptor bottom ring 96 are substantially the same for all cask support adaptors. The height of adaptor base structure 95 will vary in accordance with the height of a particular cask. The adaptor base plate 92, cask support ring 93, supports 94 and upper guide plates 97 are selected to accommodate the weight, geometry and other physical requirements of a particular cask. Apertures and cutouts in cylindrical shell 91 and base plate 92 serve to reduce the weight of the cask support adaptor 90 and to enable any collected liquids to drain directly into the cask tank means 2.

The function of a one piece cask support adaptor 90 is to provide quick conversion capability for a dry cask handling apparatus wherein a variety of sizes of fuel casks are are to be handled within a short period of time. Such would be the case in a spent fuel storage or reprocessing facility where different sizes of casks are shipped from different nuclear power generating stations. When quick conversion
capability for accommodating different types of spent fuel
casks is not needed, as would be the case in nuclear generating
stations wherein a single size of cask may be used for fuel
element removal over a long period of time, a separate cask
bottom support and structure, comprising bottom ring 96,
structure 95, base plate 92, cask support ring 93, and radial
supports 94 can be used in conjunction with separate upper
guide plates 97 without the use of the cylindrical shell 91
and without the guide shoes 98 and 98'. In this case, both
separate supports can be bolted to cask tank ribs 40, to cask
tank base structure 43, and to cask tank base ring 44.

FIGURE 8 illustrates an alternative embodiment of
the dry cask handling system of this invention. According
to FIGURE 8, the cask tank means is supported by the transport
means and is restrained against movement in all horizontal
directions, but is free to be raised on the transport or
lowered onto it. In FIGURE 8, members are numbered between
201 and 300. As with the description of FIGURES 1,2,3 and
4, all members performing functions similar to those previously
described bear the same last two digits. The cask tank means
202 is supported on the transport means 201 and is raised and
lowered by a force applied to a flange 256. This is accomplished in one embodiment by use of a cylindrical body 284
to which a cask tank mounting flange 256 is mounted. The body
284 is raised by a plurality of hydraulic or mechanical jacks
266 spaced and supported on the top of the transport frame 226.

Body 266 is guided during vertical movement by a plurality of guide shoes 285 about the body. A plurality of lock pins 265 are shown extending into apertures in the body 284 when the cask tank means 202 is at a fully elevated position at the loading terminal 213. In this raised position, the cask tank top flange 224 engages the embedment seal ring 262 and the seal between them is effected. This ceiling coupling is shown in greater detail in FIGURE 4, which was described hereinbefore.

The cask tank means 202 includes means positioned within the cask tank for supporting and restraining casks of varying dimensions. In FIGURE 8, the cask tank means 202 is shown to include a plurality of elongated internal ribs 240 which are provided with spaced holes 241. The spaced holes provide for incremental vertical adjustment of the cask base 295 which supports the fuel cask 205.

Cask supports 294 are fastened to the base to support the lower end of cask 205 laterally and/or vertically. A plurality of connecting shoes 298 are spaced around the periphery of the cask base 295 and are each provided with a plurality of holes 241' to match the holes 241 in the vertical ribs 240 to provide incremental vertical adjustment of the cask base 295 within the cask tank to permit utilization of fuel casks of different heights. While the particular embodiment shown employs vertically spaced holes, it will be apparent to those skilled in the art that any suitable means for cooperatively engaging the ribs and the connecting shoes can be employed. Inside the upper end of the cask tank means 202 are also shown adjustable supports 297 for laterally supporting the upper end or trunnions 248 for the fuel cask 205 from the vertical ribs 240. The vertical ribs 240, in combination with the cask support base 295, the upper support means 297 and the means for engaging them provide effective lateral restraint of the cask 205 within the cask tank means 202.

An improved method and apparatus for the handling of nuclear fuel elements has thus been described. The method and apparatus are advantageous in reducing the possibility of contamination of a cask surface by fluid flowing from a nuclear fuel storage pool. The apparatus is further advantageous in that it provides substantial restraint of a fuel element cask with respect to seismic forces. Other features and advantages described hereinbefore include adaptable tank means for receiving and restraining fuel casks of various sizes. The cost of the apparatus for handling fuel casks of different sizes is thereby reduced. By unweighting a cask tank from its transport means and supporting and seismically restraining the tank in a vertical direction from a floor bed of a building structure, the forces normally imposed upon the transport means, not only in supporting the tank and its enclosed cask, but also the loads established by a hydraulic head of a storage pool, enables the transport means to be substantially lighter, less complex, less costly and more reliable. The transport means advantageously includes means for establishing lateral seismic restraints on the tank and in an alternative embodiment supports the tank

27.

during fuel transfer. In a particular embodiment, the tank is unweighted and elevated from the transport means into engagement with a port plate and in another particular embodiment, the tank is elevated from and supported by the transport. Overall, the method and apparatus provide for enhanced safety of operation as well as reduced complexity and cost.

While there have been described particular embodiments of the invention, it will be appreciated by those skilled in the art that variations may be made thereto without departing from the spirit of the invention and the scope of the appended claims.

CLAIMS

1.      A method for transferring nuclear elements between
a fluid storage pool and a fuel transfer cask comprising the
steps of:

a)  Positioning at a first terminal location a transport
    having an aperture formed in a frame thereof and a
    cask tank vertically supported in said aperture on said
    transport;

b)  introducing and supporting a nuclear fuel element cask
    into said tank at said first terminal location;

c)  advancing said transport in a horizontal direction to
    a second terminal location adjacent an overhead port of
    a nuclear fuel storage pool;

d)  advancing said tank in a vertical direction toward said
    port at said second terminal location;

e)  supporting said tank in engagement with said port; and,

f)  establishing a fluid seal between said tank and said port.

2.   A method as claimed in Claim 1 including the step of
establishing a fluid sealed barrier between inner and
outer surfaces of the cask.

3.   A method as claimed in either Claim 1 or Claim 2 wherein
said tank is vertically advanced by elevating and unweighting
said tank from said transport by the application of a
lifting force to a lower surface of said tank and said tank
is supported from a rigid structure.

4. A method as claimed in either Claim 1 or Claim 2 wherein said tank is vertically advanced by establishing a lifting force between said tank and said transport means by lifting means positioned on said transport means for transport therewith.

5. A method as claimed in any preceding claim including the step of seismically restraining said transport at said second location.

6. Apparatus for transferring nuclear elements between a fluid storage pool and a fuel transfer cask comprising:

   a) a transport means adapted for movement in a horizontal direction, said transport means having a frame and an aperture formed in said frame;

   b) a tank means vertically supported on said transport means and extending through said aperture;

   c) a nuclear fuel element cask supported in said tank means;

   d) means for advancing said tank in a vertical direction toward an overhead port at a terminal location;

   e) means for supporting said tank in engagement with said port; and,

   f) means for establishing a fluid seal between said tank and said port.

7. Apparatus as claimed in Claim 6 wherein said vertical advancing means unweights said tank from said transport by the application of a lifting force to a lower surface

30.

of said tank, and supports said tank on a rigid structure.

8. Apparatus as claim in Claim 6 wherein said vertical advancing means is positioned on said transport means for movement therewith and establishes a lifting force between said tank and said transport means.

9. Apparatus as claimed in any one of Claims 6 to 8 including means for seismically restraining said transport means at a terminal location.

10. A method for transferring nuclear fuel elements between a fuel storage pool of a nuclear facility and a nuclear fuel transfer cask comprising the steps of:

a) positioning a wheeled transport means which travels on elevated tracks in a corridor between first and second terminal locations of a nuclear facility at a first terminal location, said transport means including a frame defining an aperture formed therein and a cask tank positioned vertically in and extending through said aperture and supported on said transport, said cask tank extending below said transport means;

b) lowering a nuclear fuel element cask into said tank at said first terminal location and establishing a fluid sealed barrier between inner and outer surfaces of said cask;

c) advancing said transport means, said vertically supported tank and said cask in a horizontal direction to a said second location adjacent an overhead port - of said nuclear fuel storage pool;

d) unweighting said tank from said transport by vertically advancing said tank into engagement with said port and supporting said tank from beneath by a rigid structure;

e) establishing a fluid sealed channel between said port and an interior of said cask;

f) flooding the sealed channel;

g) actuating a port closure to an open position for establishing clear access through said port between said pool and said cask; and

h) transferring fuel elements between said cask and said pool.

TBA/RDM/SO/EA 476

Fig. 1.

Fig. 2.

0071685

*Fig. 3*

*Fig. 4*

*Fig. 5.*

*Fig. 6.*

*Fig. 7.*

Fig. 8.